Europäisches Patentamt

European Patent Office

Office européen des brevets

(19)

(11) Veröffentlichungsnummer: **0 230 335 B1**

# (12) EUROPÄISCHE PATENTSCHRIFT

(45) Veröffentlichungstag der Patentschrift: **23.10.91**

(51) Int. Cl.5: **A21C 3/06**

(21) Anmeldenummer: **87200055.9**

(22) Anmeldetag: **16.01.87**

(54) **Verfahren zur Bildung von Wickeln von Teigblättern und Vorrichtung zur Durchführung des Verfahrens.**

(30) Priorität: **16.01.86 AT 94/86**

(43) Veröffentlichungstag der Anmeldung:
**29.07.87 Patentblatt 87/31**

(45) Bekanntmachung des Hinweises auf die
Patenterteilung:
**23.10.91 Patentblatt 91/43**

(84) Benannte Vertragsstaaten:
**AT BE CH DE ES FR GB GR IT LI NL SE**

(56) Entgegenhaltungen:
**WO-A-84/04081**
**CH-A- 409 758**
**FR-A- 476 929**
**FR-A- 1 426 308**
**US-A- 3 694 998**

(73) Patentinhaber: **UNILEVER NV**
**Burgemeester s'Jacobplein 1 P.O. Box 760**
**NL-3000 DK Rotterdam(NL)**

(84) Benannte Vertragsstaaten:
**BE CH DE ES FR GR IT LI NL SE AT**

Patentinhaber: **UNILEVER PLC**
**Unilever House Blackfriars P.O. Box 68**
**London EC4P 4BQ(GB)**

(84) Benannte Vertragsstaaten:
**GB**

(72) Erfinder: **Ondrovics, Johann**
**Neusiedl Zeile 55**
**Orth an der Donau 2304(AT)**

(74) Vertreter: **Tate, Rodney Vevers et al**
**UNILEVER PLC Patents Division P.O. Box 68**
**Unilever House**
**London EC4P 4BQ(GB)**

**Beschreibung**

Die Erfindung bezieht sich auf ein Verfahren zur Bildung von Wickeln von Teigblättern, insbesondere aus Blätterteig, unter Verwendung einer Haspel, auf die jeweils ein Teigblatt gewickelt wird, wobei die Teigblätter der Haspel mit einem Förderband zugeführt werden.

Bei einem bekannten Verfahren der vorgenannten Art werden langgestreckte ausgewalzte Teigblätter auf Haspeln gewickelt, welche von Hand in entsprechende Wickelvorrichtungen eingesetzt werden und nach vollständiger Bewicklung, bei der die einzelnen Teigwindungen unmittelbar aufeinander zu liegen kommen, wieder von Hand aus den Wickelvorrichtungen entnommen werden, wonach die auf die Haspeln aufgewickelten Teigbahnen sogleich einer weiteren Verarbeitung zugeführt werden. Es ist weiter auch bekannt, auf einem laufenden Förderband liegende Teigblätter von Hand aus unter Beilage von Trennblättern zu Wickeln zu formen, welche durch den Umstand, dass zwischen den Teiglagen der Wickel ein Trennblatt vorliegt, längere Zeit aufbewahrt werden können, bis sie zur endgültigen Verarbeitung wieder entrollt werden. Bei beiden vorgenannten bekannten Techniken erfolgt das Aufwickeln der Teigblätter in Berührung mit einem Transportband, auf dem die Teigblätter wandern, sodass die Drehrichtung der Wickel bzw. Haspel beim Aufwickelvorgang nach dem Abheben der Teigblätterzonen vom Förderband entgegen der Laufrichtung des Förderbandes verläuft. Ein beispiel davon kann aus dem Dokument WO-A-8 404 081 entnommen werden.

Die bekannten Techniken erfordern einen hohen Aufwand an manueller Arbeit und sind zufolge der Notwendigkeit händischer Manipulation in ihrer Leistungsfähigkeit auf eine verhältnismässig niedrige Ausbringung beschränkt.

Es ist ein Ziel der vorliegenden Erfindung, eine Technik zu schaffen, welche es ermöglicht, auf rationelle Weise maschinell mit hoher Ausbringung aus Teigblättern gerollte Wickel herzustellen, welche problemlos gehandhabt und transportiert werden können und welche auch nach längerer Lagerzeit entrollt und weiterer Verwendung zugeführt werden können.

Die Erfindung schafft ein Verfahren eingangs erwähnter Art, welches dadurch gekennzeichnet ist, dass die Teigblätter auf der Haspel mit einem vorzugsweise aus Papier bestehenden Trennblatt, welches unabhängig von dem jeweils aufzuwickelnden Teigblatt zugeführt wird, vereint werden und zusammen mit diesem Trennblatt auf die mit Abstand unterhalb einer durch Umlenkung des die Teigblätter zuführenden Förderbandes gebildeten Abwurfstelle der Teigblätter vom Förderband angeordnete, angetriebene Haspel aufgewickelt werden, und dass danach die so gebildeten Wickel von der Haspel axial abgestreift werden. Durch das erfindungsgemässe Verfahren kann der vorstehend angeführten Zielsetzung gut entsprochen werden, und es können die erwähnten Wickel auf diese Weise mit sehr einfacher Manipulation und geringem Arbeitsaufwand hergestellt werden.

Eine Ausführungsform dieses Verfahrens, welche neben einer einfachen Manipulation auch den Vorteil einer sehr sparsamen Verwendung von Trennblattmaterial erzielen lässt, ist dadurch gekennzeichnet, dass das Trennblatt mit einem Ende und das Teigblatt mit einem Ende an der Haspel vorgesehenen Schlitz eingeführt werden und dann das Wickeln vorgenommen wird.

Eine andere vorteilhafte Ausführungsform des erfindungsgemässen Verfahrens ist dadurch gekennzeichnet, dass zunächst das Trennblatt an seinem einen Ende an der Haspel fixiert wird und hierzu z.B. in einen an der Haspel vorgesehenen Schlitz eingeführt wird, dass dann die Haspel mindestens eine Umdrehung, vorzugsweise aber zwei Umdrehungen, gedreht wird und dass dann ein Ende des aufzuwickelnden Teigblattes in den zwischen dem von der Haspel weg verlaufenden Abschnitt des Trennblattes und der auf der Haspel befindlichen Windung des Trennblattes gelegenen Raum eingeführt und unter Fortsetzen des Umdrehens der Haspel dort eingeklemmt wird und in unmittelbarer Folge danach das Teigblatt zusammen mit dem Trennblatt aufgewickelt wird, wobei das Drehen der Haspel in gleichen Drehsinn wie die Bewegung des Förderbandes an der Umlenkstelle erfolgt. Diese Ausführungsform ermöglicht es, die Teigwickel herzustellen, ohne dass der Teig mit der Haspel in Berührung kommt, und es ist dies sowohl hinsichtlich des Abstreifens der Wickel von der Haspel günstig als auch hinsichtlich des Vermeidens von Druckstellen am Anfang der Teigblätter, und es hat diese Ausführungsform des Verfahrens auch noch den Vorteil, dass die Haspeln leicht sauber gehalten werden können.

Eine weitere Ausführungsform des Verfahrens sieht vor, dass als Trennblatt ein mit einigen längslaufenden Sicken versehenes Papier verwendet wird. Dies bietet bei der Zuführung der Trennblätter zur Haspel und beim Fixieren der Trennblätter an der Haspel Vorteile und ermöglicht die Verwendung sehr dünner Papiere als Trennblatt.

Die Erfindung schafft weiter eine Vorrichtung zur Durchführung des erfindungsgemässen Verfahrens, und es ist diese Vorrichtung dadurch gekennzeichnet, dass die Vorrichtung eine mit einem intermittierend schaltbaren Antrieb und mit einer Halteeinrichtung für aufzuwickelnde Blätter versehene Haspel aufweist, welche, axial gesehen, an ihrer einen Seite drehbar gelagert und an ihrer anderen Seite offenen ausgebildet ist und welche unter einer das Transportgut abliefernden Umlenkstelle eines für die Zufuhr von Teigblättern vorgesehenen Förderbandes angeordnet ist, und dass die Vorrichtung weiter eine mit einem intermittierend schaltbaren Antrieb versehene, zur Haspel führende Förderbahn für die Trennblätter aufweist. Es hat diese Vorrichtung einen einfachen Aufbau, der auf baulich einfache Weise realisiert werden kann und der eine gute Betriebssicherheit erzielen lässt.

Eine bevorzugte Ausführungsform dieser Vorrichtung ist dadurch gekennzeichnet, dass die Haspel als Gabel ausgebildet ist, zwischen deren Zinken ein Trennblatt und ein Teigblatt einführbar ist. Diese Ausführungsform ermöglicht eine einfache Durchführung des erfindungsgemässen Verfahrens, und es ermöglicht diese Ausführungsform eine stabile Ausbildung der für die erfindungsgemässe Technik wichtigen Haspel, und es kann durch diese Ausführungsform der Anfang der aufzuwickelnden Teigblätter an der Haspel mit dem als Halteeinrichtung wirkenden Schlitz zwischen den Zinken ohne, mechanisch bewegte Teile festgehalten werden. Es ist dabei für dieses Festhalten als auch für den Ablauf des Wickelvorganges günstig, wenn die Haspel als zweizinkige Gabel ausgebildet ist, deren Zinken auf den einander zugewandten Seiten flach und an den Aussenseiten abgerundet ausgebildet sind.

Eine Variante, die hinsichtlich des Zuführens der Trennblätter zur Haspel und hinsichtlich des am Beginn des Wickelvorganges zu bewirkenden Festhaltens des Anfanges des jeweiligen Trennblattes günstig ist, sieht vor, dass die Haspel mit einer als Ansaugeinrichtung ausgebildeten Halteeinrichtung versehen ist.

Hinsichtlich des Abstreifens der fertig gewickelten Wickel von der Haspel ist es vorteilhaft, wenn man vorsieht, dass die Haspel axial verschiebbar gelagert und mit einem Verschiebeantrieb versehen ist, mit dem sie in ihre Drehlagerung einfahr- und aus dieser ausfahrbar ist.

Eine bevorzugte Ausführungsform der erfindungsgemässen Vorrichtung ist dadurch gekennzeichnet, dass die Förderbahn für die Trennblätter mit perforierten Transportbändern versehen ist, welche mit einem Antrieb versehen sind und über einen Saugkasten geführt sind, der in den unter den Transportbändern gelegenen Zonen mit Saugöffnungen versehen ist, welche in längs den Transportbändern fortschreitender Aufeinanderfolge periodisch mit den Perforationsöffnungen der Transportbänder fluchten. Diese Ausführungsform ergibt eine sehr sichere Zuführung der Trennblätter zur Haspel, auch wenn das Material, aus dem die Trennblätter bestehen, nur eine geringe Eigensteifigkeit besitzt, wie dies z.B. bei sehr dünnem Papier der Fall ist. Die Betriebssicherheit der Zuführung der Trennblätter zur Haspel kann weiter auch dadurch verbessert werden, dass man vorsieht, dass die Förderbahn für die Trennblätter eine als quergenutete Schiene oder Walze ausgebildete Auflage, welche quer zur Laufrichtung der Förderbahn verlaufend an dieser angeordnet ist, und mit den Quernuten dieser Auflage zusammenarbeitende, in die Quernuten eingreifende Falzmesser oder Falzrollen aufweist, welche in die Trennblätter, welche zwischen der Auflage und den Falzmessern oder Falzrollen hindurchgeführt werden, Längssicken eindrücken. Die dabei gebildeten Längssicken schaffen eine sehr wirksame Vergrösserung der Steifigkeit bzw. Biegesteifigkeit der Trennblätter, und es ist damit auch bei geringer Materialstärke derselben ein rasches und sicheres Zubringen zur Haspel und Festhalten an dieser, z.B. durch Einschieben zwischen zwei an der Haspel vorgesehene Gabelzinken, möglich. Hierbei ist es weiter vorteilhaft, wenn man vorsieht, dass an der Förderbahn, am haspelseitigen Ende derselben, zwischen den Transportbändern positionierte, schwenkbar gelagerte Andruckrollen vorgesehen sind, die die Trennblätter gegen den Saugkasten bzw. die Transportbänder drücken. Dies ergibt eine weitere Verbesserung der Führung der Trennblätter, insbesondere beim Inkontaktbringen dieser Blätter mit der Haspel.

Im Interesse des Aufrechterhaltens einer guten Stabilität der fertig gerollten Wickel gegen ein Lösen der äusseren Windungen und damit zur Erzielung einer guten Handhabbarkeit der fertigen Wickel ist es vorteilhaft, am Wickel aussen eine Windung des Trennblattes vorzusehen und diese Windung gegen Lösen zu fixieren. Hierfür ist bei einer Ausführungsform der erfindungsgemässen Vorrichtung vorgesehen, dass an der Förderbahn für die Trennblätter eine Klebstoffauftragsvorrichtung zur impulsweisen Abgabe kleiner Klebstoffmengen an den Endbereich der Trennblätter angeordnet ist. Es ist weiter günstig, wenn eine an der Aussenseite des auf der Haspel befindlichen Wickels zur Anlage kommende Federklappe zum Anlegen des Endes des Trennblattes an den Wickel vorgesehen ist.

Eine sehr vorteilhafte Steuerung des Wickelvorganges kann auf baulich sehr einfache Weise erhalten werden, wenn man vorsieht, dass im Bereich der haspelseitigen Umlenkstelle des für die Zufuhr von Teigblättern vorgesehene Förderbandes ein das Vorhandensein eines auf dem Förderband liegend zur Umlenkstelle gelangenden Teigblattes erfassender Sensor angeordnet ist, der an die Steuerung des Haspeldrehantriebes angeschlossen ist und beim Vorhandensein eines Teigblattes den Haspeldrehantrieb, vorzugsweise mit zeitlicher Verzögerung, einschaltet.

Es ist sowohl vom Gestehungspreis des Trennblattmaterials her als auch hinsichtlich der für das Zuführen der Trennblätter zur Haspel erforderlichen baulichen Massnahmen vorteilhaft, wenn man zur Bildung der Trennblätter ein Bahnmaterial, welches auf eine Vorratsrolle aufgewickelt ist, verwendet. Hierfür ergibt sich eine günstige Ausführungsform der erfindungsgemässen Vorrichtung, wenn man vorsieht, dass die Vorrichtung ein Lager für eine Vorratsrolle aufweist, auf die eine langgestrecktes Papierband, aus dem die Trennblätter geschnitten werden, aufgerollt ist, dass, in Förderrichtung der Förderbahn für die Trennblätter gesehen, im Anfangsbereich dieser Förderbahn eine das Papierband in Abschnitte unterteilende Trennschere und im Bereich der Haspel ein das Einlangen eines Trennblattes bzw. des vorderen Randes desselben erfassender Sensor angeordnet ist und dass dieser Sensor mit dem Antrieb der Trennschere verbunden ist.

Ist zur Fixierung der äussersten Windung der aufgerollten Wickel eine Klebstoffauftragsvorrichtung vorgesehen, so ist es vorteilhaft, diese mit einem Sensor zu steuern, der im Anfangsbereich der Förderbahn für die Trennblätter an einer vor der Klebstoffauftragsvorrichtung und nach der Trennschere gelegenen Stelle angeordnet ist und der den Vorbeilauf des hinteren Randes eines Trennblattes erfasst, und der mit der Auslöseeinrichtung der Klebstoffauftragsvorrichtung verbunden ist und beim Vorbeilauf des hinteren Randes eines Trennblattes die Abgabe eines Klebstoffauftrages auf das betreffende Trennblatt bewirkt.

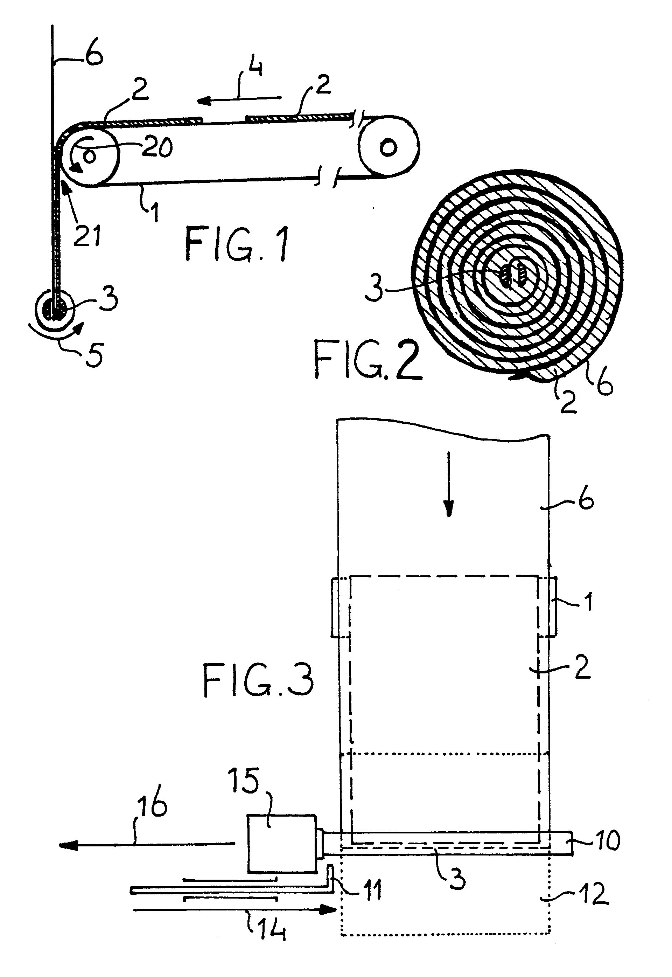

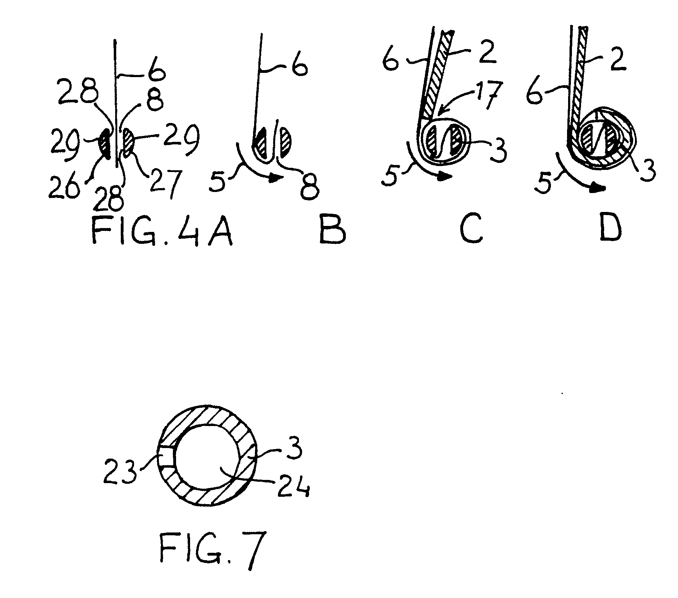

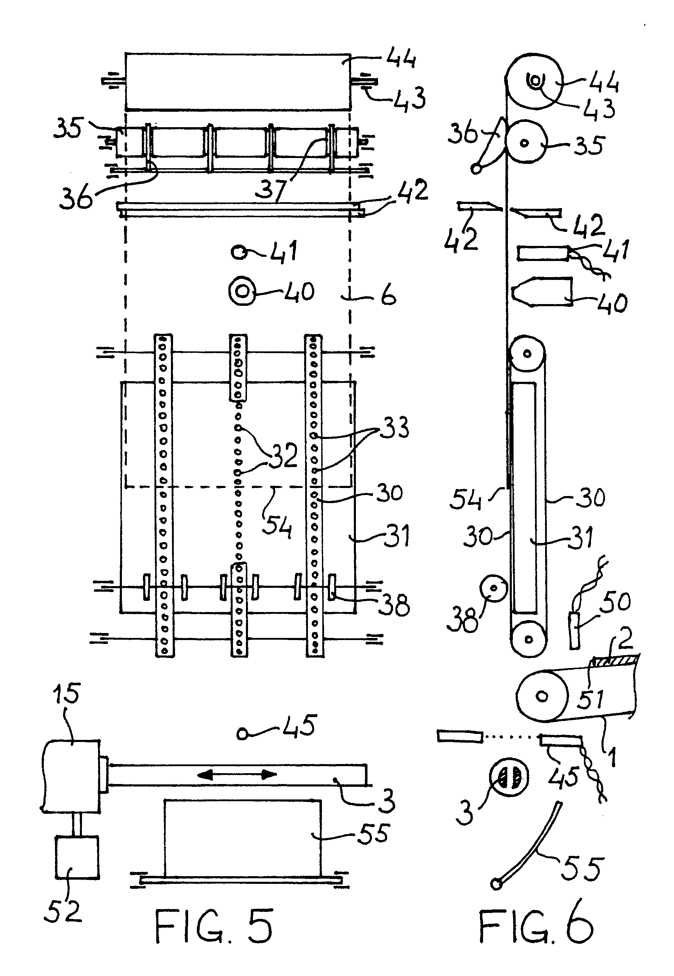

Die Erfindung wird nun unter Bezugnahme auf Beispiele, welche schematisch in der Zeichnung dargestellt sind, weiter erläutert. In der Zeichnung zeigt Fig. 1 in einer schematisch gehaltenen Seitenansicht eine Ausführungsform einer für das erfindungsgemässe Verfahren ausgebildeten Vorrichtung vor dem Beginn des Wickelvorganges, Fig. 2 den Haspelbereich dieser Vorrichtung in einer der Fig. 1 entsprechenden Darstellung am Ende des Wickelvorganges, Fig. 3 diese Vorrichtung in Ansicht von vorne, Fig. 4 den Bereich der Haspel einer für das erfindungsgemässe Verfahren ausgebildeten Vorrichtung in Seitenansicht in mehreren im Zuge der Bildung eines Wickels aufeinanderfolgenden Stadien, Fig. 5 eine weitere Ausführungsform einer für die Durchführung des erfindungsgemässen Verfahrens ausgebildeten Vorrichtung in Ansicht von vorne, Fig. 6 diese Vorrichtung in Seitenansicht, und Fig. 7 eine abgewandelte Ausführungsform einer zur Durchführung des erfindungsgemässen Verfahrens vorgesehenen Haspel.

Bei der in den Fig. 1 bis 3 dargestellten Vorrichtung ist ein Förderband 1 vorgesehen, mit dem Teigblätter 2 einer Haspel 3 zugeführt werden, mittels der die Teigblätter 2 zu Wickeln aufgewickelt werden. Die Laufrichtung des Förderbandes 1 ist mit einem Pfeil 4 und die Drehrichtung der Haspel 3 ist mit einem Pfeil 5 bezeichnet. Die Teigblätter 2 werden auf der Haspel 3 mit einem Trennblatt 6, welches unabhängig vom jeweils aufzuwickelnden Teigblatt der Haspel zugeführt wird, zusammen aufgewickelt, sodass im fertigen Wickel die einzelnen Windungen des Teigblattes durch das Trennblatt 6 voneinander getrennt sind. Die Haspel 3 ist mit Abstand unterhalb einer durch die Umlenkung 21 des Förderbandes 1 gebildeten Abwurfstelle angeordnet, an der die Teigblätter das Förderband 1 verlassen, um zur Haspel 3 zu gelangen.

Um die erforderliche Mitnahme des Teigblattes 2 und des Trennblattes 6 mit der Drehung der Haspel 3 am Beginn der Bildung des Wickels zu erzielen, weist die Haspel 3 einen Schlitz 8 auf, in den das Trennblatt 6 mit einem Ende und das Teigblatt 2 mit einem Ende eingeführt werden, wonach die Haspel 3 in Drehung versetzt wird. Dieser Schlitz wirkt als Halteeinrichtung für die Anfangsenden der Trennblätter 6 und der Teigblätter 2. Ist der Wickel, wie Fig. 2 zeigt, fertig gewickelt, wird er von der Haspel 3 axial abgestreift. Dies ist ohne weiteres möglich, weil die Haspel an ihrem einen Ende 10 offen ist. Das Abstreifen kann mit einem geeigneten Schieber 11 vorgenommen werden, der am fertigen Wickel 12 angreift und zum axialen Abstreifen des Wickels 12 von der Haspel im Sinne des Pfeils 14 in Richtung der Achse der Haspel 3 vorgeschoben wird oder indem man die Haspel 3 mit einem nicht näher dargestellten Verschiebeantrieb in ihr Drehlager 15 in Richtung des Pfeiles 16 zurückzieht, wodurch es gleichfalls zu einem Abstreifen des Wickels 12 von der Haspel 3 kommt, und anschliessend die Haspel wieder in die dargestellte Lage ausfährt.

Das Einführen eines Endes des Trennblattes 6 und eines Endes des aufzuwickelnden ausgewalzten Teigblattes 2 in einen an der Haspel 3 vorgesehenen Schlitz, bevor die Haspel 3 in Drehung versetzt wird, hat den Vorteil, dass mit einer minimalen Länge des Trennblattes das Auslangen gefunden werden kann. Es kommt aber das Teigblatt 2 unmittelbar mit der Haspel in Berührung, sodass dem Reinhalten der Haspel besondere Aufmerksamkeit zugewendet werden muss; desgleichen muss besondere Sorgfalt insbesondere beim Einführen der Teigblätter in die Haspel und beim axialen Abstreifen der fertigen Wickel von der Haspel angewendet werden, um dem Entstehen von unerwünschten Druckstellen u.dgl. vorzubeugen.

Eine direkte Berührung der aufzuwickelnden Teigblätter 2 mit der Haspel wird bei der in Fig. 4 A-D dargestellten Vorgangsweise vermieden. Es wird dabei zunächst das zur Bildung des jeweiligen Wickels verwendete Trennblatt an seinem einen Ende an der Haspel fixiert, z.B. indem es analog wie bei der in Fig. 1 dargestellten Vorgangsweise in einem an der Haspel 3 vorgesehenen Schlitz 8 eingeführt wird, wonach die Haspel mindestens eine Umdrehung, vorzugsweise aber zwei Umdrehungen, gedreht wird, und es wird dann ein Ende des aufzuwickelnden Teigblattes 2 in den zwischen dem von der Haspel 3 weg verlaufenden Abschnitt des Trennblattes 6 und der auf der Haspel befindlichen Windung des Trennblattes gelegenen Raum 17 eingeführt und unter Fortsetzen des Umdrehens der Haspel 3 zwischen dem von der Haspel weg verlaufenden Abschnitt des Trennblattes 6 und der auf der Haspel befindlichen Windung des Trennblattes eingeklemmt und in unmittelbarer Folge danach zusammen mit dem Trennblatt aufgewickelt. Die Drehung der Haspel 3 erfolgt dabei im Sinne des Pfeiles 5, also in gleichem Drehsinn wie die durch den Pfeil 20 angedeutete Bewegung des Förderbandes 1 an der Umlenkstelle 21 desselben, an der der Abwurf der Teigblätter 2 vom Förderband 1 erfolgt. Es ist bei dieser Ausführungsform des Verfahrens zur Bildung der Wickel jegliche Berührung der Teigblätter mit der Haspel vermieden, und es kann durch den dabei gebildeten Schutz der Teigblätter rascher gearbeitet werden, ohne dass die Gefahr besteht, an den Teigblättern unerwünschte Druckstellen oder andere Beschädigungen zu verursachen. Das Fixieren des einen Endes des für den jeweils herzustellenden Wickel verwendeten Trennblattes an der Haspel kann auch auf andere Weise als in den Fig. 1 und 4 dargestellt ist, vorgenommen werden. So kann man z.B. die Haspel mit einer Klappe versehen, mit der ein Ende des Trennblattes an der Haspel festgehalten wird, oder man kann z.B., wie in Fig. 7 dargestellt ist, an der Haspel 3 Saugöffnungen 23 vorsehen, die mit einem im Inneren der Haspel 3 vorgesehenen Vakuumkanal 24 in Verbindung stehen und mit denen das Trennblatt an die Aussenseite der Haspel 3 angesaugt werden kann.

Der zum Fixieren des einen Ende der Trennblätter in der Haspel 3 vorgesehene Schlitz 8 wird vorzugsweise diametral durchgehend ausgebildet und dies hat den Vorteil, dass beim Einführen des Endes der Teigblätter in diesen Schlitz grössere Toleranzen zugelassen werden können, ohne den erzielbaren Halt der Trennblätter in der Haspel zu gefährden. Durch einen solchen diametral durchgehend verlaufenden Schlitz, wie er in den Fig. 1, 2 und 4 dargestellt ist, ergibt sich eine Ausbildung der Haspel in Form einer Gabel. Im dargestellten Fall ist die Gabel zweizinkig und es sind die Zinken 26, 27 auf den einander zugewendeten Seiten 28 flach und an den Aussenseiten 29 abgerundet ausgebildet. Auf diese Weise wird eine betriebssichere gute Fixierung der Trennblätter im Schlitz 8 und gleichzeitig auch ein gleichmässiger Ablauf des Wickelvorganges erzielt, sodass beim Wickelvorgang keine ungleichmässigen Belastungen der aufzuwickelnden Teigblätter auftreten. Die Fixierung der Trennblätter im Schlitz 8 ist umso besser, je steifer das Trennblattmaterial ist und je mehr die Trennblätter die Spaltbreite ausfüllen. So kann man bei einem dünnen Trennblattmaterial durch das Vorsehen von Längssicken in diesem nicht nur die Exaktheit der Zuführung der Trennblätter zur Haspel verbessern, sondern auch den Halt, den das eine Ende der Trennblätter im Schlitz 8 der Haspel 3 findet.

Bei der in den Fig. 5 und 6 dargestellten Ausführungsform einer erfindungsgemässen Vorrichtung ist eine Förderbahn für die der Haspel zuzuführenden Trennblätter 6 vorgesehen, welche mit perforierten Transportbändern 30 versehen ist, die über einen Saugkasten 31 geführt sind, der in den unter den Transportbändern 30 gelegenen Zonen mit Saugöffnungen 32 versehen ist, welche mit den in den Transportbändern 30 vorgesehenen Perforationsöffnungen 33 beim Lauf der Transportbänder 30 in längs den Transportbändern fortschreitender Aufeinanderfolge periodisch fluchten. Der Saugkasten 31 ist an eine geeignete Vakuumquelle bzw. Saugpumpe angeschlossen, und es wird demgemäss ein vor den Transportbändern 30 liegendes Trennblatt 6 an die Transportbänder angesaugt und durch die Bewegung der Transportbänder zur Haspel 3 geführt. Der in Laufrichtung gemessene gegenseitige Abstand aufeinanderfolgender Saugöffnungen 32 ist geringfügig abweichend vom gegenseitigen Abstand aufeinanderfolgender Perforationsöffnungen 33 gewählt, und es wird dadurch beim Lauf der Transportbänder 30 das periodische Fluchten der Perforationsöffnungen 33 mit den Saugöffnungen 32 in einer längs den Transportbändern fortschreitenden Aufeinanderfolge und eine ausreichend gleichmässige Verteilung der Saugwirkung über die in Laufrichtung der Transportbänder 30 verlaufende Längserstreckung des Saugkastens 31 erzielt.

Um die Biegesteifigkeit der Trennblätter 6 in Längs- bzw. bzw. Laufrichtung zu erhöhen, weist die Vorrichtung eine als quergenutete Schiene oder Walze ausgebildete Auflage 35 auf, welche quer zur Laufrichtung der Förderbahn verlaufend an dieser angeordnet ist und weiter Falzrollen oder Falzmesser 36, die mit den Quernuten 37 der Auflage 35 zusammenarbeiten und beim Durchlauf der Trennblätter 6 zwischen der Auflage 35 und den Falzmessern 36 oder Falzrollen in diesen Trennblättern Längssicken bilden. Zur weiteren Führung der Trennblätter 6 sind am haspelseitigen Ende der Förderbahn zwischen den Transportbändern 30 positionierte schwenkbar gelagerte Andruckrollen 38 vorgesehen, die die Trennblätter 6 gegen den Saugkasten bzw. gegen die Transportbänder drücken.

An der Förderbahn für die Trennblätter 6 ist weiter eine Klebstoffauftragsvorrichtung 40 zur impulsweisen Abgabe kleiner Klebstoffmengen an die Trennblätter 6 angeordnet. Diese Klebstoffauftragsvorrichtung dient dazu, an den Trennblättern 6, und zwar im Endbereich derselben, der in den herzustellenden Wickeln die äusserste Windungslage bildet, Klebepunkte anzubringen, welche die Wickel gegen ein unbeabsichtigtes Lösen sichern. Zur exakten Positionierung dieser mit der Klebstoffauftragsvorrichtung 40 zu bildenden Klebepunkte auf den Trennblättern ist die Vorrichtung mit einem Sensor 41 versehen, der im Anfangsbereich der Förderbahn für die Trennblätter an einer vor der Klebstoffauftragsvorrichtung gelegenen Stelle angeordnet ist und den Vorbeilauf des hinteren Randes der Trennblätter erfasst und sobald dieser Vorbeilauf erfolgt die Klebstoffauftragsvorrichtung zur Abgabe einer kleinen Klebstoffmenge auf das vorbeilaufende Trennblatt 6 aktiviert.

Ist, wie im dargestellten Fall, eine Bildung der Trennblätter 6 in der Vorrichtung aus einem langgestreckten Papierband vorgesehen, welches in Form einer Vorratsrolle in die Vorrichtung eingesetzt wird und in der Vorrichtung mit einer Trennschere in einzelne Abschnitte unterteilt wird, die die einzelnen Trennblätter bilden, ist der Sensor 41 nach der Trennschere 42 angeordnet, und es wird die Trennschere 42, der das Papierband, von der in Lagern 43 liegenden Papierrolle 44 zuläuft, von einem Sensor 45 gesteuert, der im Bereich der Haspel 3 angeordnet ist und das Einlangen eines Trennblattes bzw. des vorderen Randes desselben erfasst. Langt der vordere Rand eines Trennblattes beim Sensor 45 ein, wird die Trennschere 42 betätigt.

Zur Steuerung des Anlaufes des Aufwickelns der Teigblätter ist im Bereich der haspelseitigen Umlenkstelle 21 des für die Zufuhr von Teigblättern 2 vorgesehenen Förderbandes 1 ein Sensor 50 angeordnet, der das Vorhandensein eines auf dem Förderband 1 liegend zur Umlenkstelle gelangenden Teigblattes 2 bzw. das Auftreten des vorderen Endes 51 eines solchen Teigblattes erfasst. Dieser Sensor ist an die Steuerung des Antriebes 52 der Haspel 3 angeschlossen und schaltet den Haspelantrieb 52 mit zeitlicher Verzögerung ein. Die zeitliche Verzögerung ist dabei so gewählt, dass das vordere Ende 51 eines Teigblattes 2, welches im Bereich der Umlenkstelle 21 des Förderbandes das Förderband verlässt, die Haspel 3, welche unter der Umlenkstelle 21 angeordnet ist, erreicht, bevor die Rotation der Haspel beginnt. Bei der in Fig. 4 dargestellten Vorgangsweise wird beim Einlangen des vorauslaufenden Endes 54 eines Trennblattes 6 im Schlitz 8 der Haspel 3 der Haspelantrieb 52 zunächst zur Ausführung einer oder mehreren Umdrehungen eingeschaltet, sodass das Trennblatt eine oder mehrere um die Haspel liegende Windungen bildet, und es wird daraufhin der Haspelantrieb 52 gestoppt, bis, wie vorstehend beschrieben, beim Einlangen des vorderen Endes 51 eines Teigblattes 2 eine neuerliche Einschaltung durch den Sensor 50 erfolgt. Es wird dabei die Haspel solange in Drehung gehalten, bis das Teigblatt und das Trennblatt zu einem Wickel gewickelt sind, wobei die äusserste Windung durch das Trennblatt gebildet wird und, wie oben erwähnt, mit einem Klebstoffpunkt fixiert wird. Beim Wickelvorgang werden die Windungslagen mit einer Klappe 55, welche parallel zur Haspel 3 verlaufend angeordnet und an den entstehenden Wickel federnd andrückbar ist, angedrückt und es wird auch die vorgenannte Klebpunktfixierung durch dieses Andrücken fertiggestellt. Anschliessend wird der fertiggestellte Wickel, wie bereits oben in Zusammenhang mit den Fig. 1 bis 3 beschrieben worden ist, von der Haspel 3 axial abgestreift und abtransportiert.

## Patentansprüche

1. Verfahren zur Bildung von Wickeln von Teigblättern, insbesondere aus Blätterteig, unter Verwendung einer Haspel, auf die jeweils ein Teigblatt gewickelt wird, wobei die Teigblätter der Haspel mit einem Förderband zugeführt werden, dadurch gekennzeichnet, dass die Teigblätter auf der Haspel mit einem vorzugsweise aus Papier bestehenden Trennblatt, welches unabhängig von dem jeweils aufzuwickelnden Teigblatt zugeführt wird, vereint werden und zusammen mit diesem Trennblatt auf die mit Abstand unterhalb einer durch Umlenkung des die Teigblätter zuführenden Förderbandes gebildeten Abwurfstelle der Teigblätter vom Förderband angeordnete, angetriebene Haspel aufgewickelt werden, und dass danach die so gebildeten Wickel von der Haspel axial abgestreift werden.

2. Verfahren nach Anspruch 1, dadurch gekennzeichnet, dass das Trennblatt mit einem Ende und das Teigblatt mit einem Ende in einen an der Haspel vorgesehenen Schlitz eingeführt werden und dann das Wickeln vorgenommen wird.

3. Verfahren nach Anspruch 1, dadurch gekennzeichnet, dass zunächst das Trennblatt an seinem einen Ende an der Haspel fixiert wird und hierzu z.B. in einen an der Haspel vorgesehenen Schlitz eingeführt wird, dass dann die Haspel mindestens eine Umdrehung, vorzugsweise aber zwei Umdrehungen, gedreht wird und dass dann ein Ende des aufzuwickelnden Teigblattes in den zwischen dem von der Haspel weg verlaufenden Abschnitt des Trennblattes und der auf der Haspel befindlichen Windung des Trennblattes gelegenen Raum eingeführt und unter Fortsetzen des Umdrehens der Haspel dort eingeklemmt wird und in unmittelbarer Folge das Teigblatt zusammen mit dem Trennblatt aufgewickelt wird, wobei das Drehen der Haspel im gleichen Drehsinn wie die Bewegung des Förderbandes an der Umlenkstelle erfolgt.

4. Verfahren nach einem der Ansprüche 1 bis 3, dadurch gekennzeichnet, dass als Trennblatt ein mit einigen längslaufenden Sicken versehenes Papier verwendet wird.

5. Vorrichtung zur Durchführung des Verfahrens nach einem der Ansprüche 1 bis 4, dadurch gekennzeichnet, dass die Vorrichtung eine mit einem intermittierend schaltbaren Antrieb (52) und mit einer Halteeinrichtung für aufzuwickelnde Blätter (2) versehene Haspel (3) aufweist, welche, axial gesehen, an ihrer einen Seite drehbar gelagert und an ihrer anderen Seite offen ausgebildet ist und welche unter einer das Transportgut abliefernden Umlenkstelle (21) eines für die Zufuhr von Teigblättern (2) vorgesehenen Förderbandes (1) angeordnet ist, und dass die Vorrichtung weiter eine mit einem intermittierend schaltbaren Antrieb versehene, zur Haspel führende Förderbahn (30, 31) für die Trennblätter (6) aufweist.

6. Vorrichtung nach Anspruch 5, dadurch gekennzeichnet, dass die Haspel (3) als Gabel ausgebildet ist, zwischen deren Zinken (26, 27) ein Trennblatt (6) und ein Teigblatt (2) einführbar ist.

7. Vorrichtung nach Anspruch 5 oder 6, dadurch gekennzeichnet, dass die Haspel (3) als zweizinkige Gabel ausgebildet ist, deren Zinken (26, 27) auf den einander zugewandten Seiten (28) flach und an den Aussenseiten (29) abgerundet ausgebildet sind.

8. Vorrichtung nach Anspruch 5, dadurch gekennzeichnet, dass die Haspel (3) mit einer als Ansaugeinrichtung (23, 24) ausgebildeten Halteeinrichtung versehen ist.

9. Vorrichtung nach einem der Einsprüche 5 bis 8, dadurch gekennzeichnet, dass die Haspel (3) axial verschiebbar gelagert und mit einem Verschiebeantrieb versehen ist, mit dem sie in ihre Drehlagerung (15) einfahr- und aus dieser ausfahrbar ist.

10. Vorrichtung nach einem der Ansprüche 5 bis 9, dadurch gekennzeichnet, dass die Förderbahn für die Trennblätter (6) mit perforierten Transportbändern (30) versehen ist, welche mit einem Antrieb versehen sind und über einen Saugkasten (31) geführt sind, der in den unter den Transportbändern (30) gelegenen Zonen mit Saugöffnungen (32) versehen ist, welche in längs den Transportbändern fortschreitender Aufeinanderfolge periodisch mit den Perforationsöffnungen (33) der Transportbänder (30) fluchten.

11. Vorrichtung nach einem der Ansprüche 5 bis 10, dadurch gekennzeichnet, dass die Förderbahn für die Trennblätter (6) eine als quergenutete Schiene oder Walze (35) ausgebildete Auflage, welche quer zur Laufrichtung der Förderbahn verlaufend an dieser angeordnet ist, und mit den Quernuten (37) dieser Auflage zusammenarbeitende, in die Quernuten eingreifende Falzmesser (36) oder Falzrollen aufweist, welche in die Trennblätter, welche zwischen der Auflage und den Falzmessern oder Falzrollen hindurchgeführt werden, Längssikken eindrücken.

12. Vorrichtung nach Anspruch 11, dadurch gekennzeichnet, dass an der Förderbahn, am haspelseitigen Ende derselben, zwischen den Transportbändern (30) positionierte, schwenkbar gelagerte Andruckrollen (38) vorgesehen sind, die die Trennblätter (6) gegen den Saugkasten (31) bzw. die Transportbänder (30) drücken.

13. Vorrichtung nach einem der Ansprüche 5 bis 12, dadurch gekennzeichnet, dass an der Förderbahn für die Trennblätter (6) eine Klebstoffauftragsvorrichtung (40) zur impulsweisen Angabe kleiner Klebstoffmengen an den Endbereich der Trennblätter angeordnet ist.

14. Vorrichtung nach einem der Ansprüche 5 bis 13, dadurch gekennzeichnet, dass eine an der Aussenseite des auf der Haspel (3) befindlichen Wickels zur Anlage kommende Federklappe (55) zum Anlegen des Endes des Trennblattes (6) an den Wickel vorgesehen ist.

15. Vorrichtung nach einem der Ansprüche 5 bis 14, dadurch gekennzeichnet, dass im Bereich der haspelseitigen Umlenkstelle (21) des für die Zufuhr von Teigblättern (2) vorgesehenen Förderbandes (1) ein das Vorhandensein eines auf dem Förderband (1) liegend zur Umlenkstelle (21) gelangenden Teigblattes (2) erfassender Sensor (45) angeordnet ist, der an die Steuerung des Haspeldrehantriebes (52) angeschlossen ist und beim Vorhandensein eines Teigblattes den Haspeldrehantrieb (52), vorzugsweise mit zeitlicher Verzögerung, einschaltet.

16. Vorrichtung nach einem der Ansprüche 5 bis 14, dadurch gekennzeichnet, dass die Vorrichtung ein Lager (43) für eine Vorratsrolle (44) aufweist, auf der ein langgestrecktes Papierband, aus dem die Trennblätter geschnitten werden, aufgerollt ist, dass, in Förderrichtung der Förderbahn für die Trennblätter (6) gesehen, im Anfangsbereich dieser Förderbahn eine das Papierband in Abschnitte unterteilende Trennschere (42) und im Bereich der Haspel (3) ein das Einlangen eines Trennblattes (6) bzw. des vorderen Randes desselben erfassender Sensor (45) angeordnet ist und dass dieser Sensor (45) mit dem Antrieb der Trennschere (42) verbunden ist.

17. Vorrichtung nach Anspruch 13, dadurch gekennzeichnet, das im Anfangsbereich der Förderbahn für die Trennblätter an einer vor der Klebstoffauftragsvorrichtung (40) und nach der Trennschere (42) gelegenen Stelle ein den Vorbeilauf des hinteren Randes eines Trennblattes (6) erfassender Sensor (41) angeordnet ist, der mit der Auslöseeinrichtung der Klebstoffauftragsvorrichtung (40) verbunden ist.

## Claims

1. A method of forming sheets of pastry in particular puff pastry into rolls using a reel onto which each sheet of pastry is wound, the sheets of pastry being delivered to the reel by a conveyor, characterized in that the sheets of pastry are combined on the reel with an interleaving sheet preferably of paper delivered independently of the pastry sheet and are rolled together with the said interleaving sheet on a power-driven reel arranged at a distance below a pastry sheet delivery zone formed by the end of the conveyor that carries the pastry sheets and the rolls thereby formed are subsequently stripped from the reel in an axial direction.

2. A method according to claim 1 characterized in that one end of the interleaving sheet and one end of the pastry sheet are introduced into a slit in the reel and winding is begun.

3. A method according to claim 1 characterized in that one end of the interleaving sheet is first attached to the reel for example by insertion into a slit in the reel, the reel is rotated at least once and preferably twice, one end of the pastry sheet is introduced into the space between the portion of the interleaving sheet extending away from the reel and the layer of interleaving sheet already wound onto the reel and is held in position as the reel continues to rotate and immediately thereafter the sheet of pastry is wound into a roll together with the interleaving sheet, the reel rotating in the same direction as the direction in which the belt travels at the delivery end of the conveyor.

4. A method according to one of claims 1 to 3 characterized in that the interleaving sheet is a paper provided with several longitudinal beads.

5. An apparatus for carrying out the method according to one of claims 1 to 4 characterized in that the apparatus comprises a reel (3) with an intermittently activatable drive (52) and a holding device for the sheets (2) that are to be rolled up, which reel when viewed axially is rotatably mounted at one end and free at the other and is arranged below the product delivery end (21) of a conveyor belt (1) which carries the pastry sheets, the apparatus also having a conveyor (30, 31) with an intermittently activatable drive which carries the interleaving sheets (6) to the reel.

6. An apparatus according to claim 5 characterized in that the reel (3) is formed as a fork between whose tines (26, 27) an interleaving sheet (6) and a pastry sheet (2) can be inserted.

7. An apparatus according to either claim 5 or claim 6 characterized in that the reel (3) is formed as a two-tined fork whose tines (26, 27) have flat facing surfaces (28) and rounded outside surfaces (29).

8. An apparatus according to claim 5 characterized in that the reel (3) is provided with a gripping device in the form of a suction means (23, 24).

9. An apparatus according to one of claims 5 to 8 characterized in that the reel (3) is mounted in an axially slidable manner and provided with a sliding drive by means of which it can be retracted into and extended from its rotary mounting (15).

10. An apparatus according to one of claims 5 to 9 characterized in that the conveyor for interleaving sheets (6) has perforated carrying belts (30) which are provided with a drive and pass over a suction box (31) which in the zones that lie underneath the carrying belts (30) is provided with suction openings (32) which periodically align with the perforated openings (33) in the carrying belts (30) in a progressive sequence along the carrying belts.

11. An apparatus according to one of claims 5 to 10 characterized in that the conveyor for the interleaving sheets (6) is provided with a support in the form of a transversely grooved rail or roller (35) arranged transversely to the running direction of the conveyor, and with beading blades (36) or beading rolls that cooperate and engage with the transverse grooves (37) of the support to impress longitudinal beads in the interleaving sheets that pass between the support and the beading blades or beading rolls.

12. An apparatus according to claim 11 characterized in that pivotably mounted pressing rolls (38) positioned between the carrying belts (30) are provided at the reel end of the conveyor to press the interleaving sheets (6) against the suction box (31) and the carrying belts (30).

13. An apparatus according to one of claims 5 to 12 characterized in that the conveyor that carries the interleaving sheets (6) is provided with an adhesive applying device (40) that intermittently applies small amounts of adhesive to the end portion of the interleaving sheets.

14. An apparatus according to one of claims 5 to 13 characterized in that a sprung flap (55) that contacts the outside surface of the roll on the reel (3) is provided to press the end of the interleaving sheet (6) to the roll.

15. An apparatus according to one of claims 5 to 14 characterized in that in the vicinity of the delivery end (21) of the conveyor (1) for pastry sheets (2) adjacent the reel there is provided a sensor (45) that detects the presence on the conveyor (1) of a pastry sheet (2) as it arrives at the delivery end (21) of the conveyor and that is connected to the control means for the rotary reel drive (52) and on detecting the presence of a sheet of pastry activates the rotary reel drive (52) preferably after a time lag.

16. An apparatus according to one of claims 5 to 14 characterized in that the apparatus comprises a mounting (43) for a magazine roll (44) holding a long paper web from which the interleaving sheets are cut, and at the beginning of the conveyor viewed in the direction of travel of the conveyor for the interleaving sheets (6), a cutter (42) to cut the paper web into sheets, and in the vicinity of the reel (3) a sensor (45) to detect the arrival of an interleaving sheet (6) or the leading edge thereof, the sensor (45) being connected to the drive for the cutter (42).

17. An apparatus according to claim 13 characterized in that a sensor (41) that detects the passage of the trailing edge of an interleaving sheet (6) is arranged at the beginning of the conveyor for the interleaving sheets in a position upstream of the adhesive applying device (40) and downstream of the cutter (42) and is connected to the release mechanism of the adhesive applying device (40).

**Revendications**

1. Procédé de fabrication de rouleaux de feuilles de pâte, particulièrement de pâte feuilletée, avec utilisation d'un bobinoir sur lequel chaque feuille de pâte est enroulée, les feuilles de pâte étant conduites au bobinoir par une bande transporteuse, caractérisé par le fait que sur le bobinoir, les feuilles de pâte sont réunies à une feuille intercalaire, de préférence en papier, laquelle est conduite indépendamment de chaque feuille à enrouler, et qu'elles sont enroulées avec cette feuille intercalaire sur le bobinoir motorisé et disposé à distance de la bande en-dessous d'une station de déversement formée par une déviation de la bande transporteuse conduisant les feuilles de pâte et qu'ensuite, les rouleaux ainsi formés sont retirés du bobinoir axialement.

2. Procédé selon la revendication 1, caractérisé par le fait que la feuille intercalaire, par une extrémité, et la feuille de pâte, par une extrémité, sont introduites dans une fente prévue sur le bobinoir et que l'enroulement se fait ensuite.

3. Procédé selon la revendication 1, caractérisé par le fait que, tout d'abord, la feuille intercalaire est fixée à l'une de ses extrémités sur le bobinoir et que pour cela, elle est introduite dans une fente par exemple prévue sur le bobinoir, qu'ensuite le bobinoir fait un tour au moins, mais de préférence deux tours et qu'alors une extrémité de la feuille de pâte à enrouler est introduite dans l'espace se trouvant entre la partie de la feuille de pâte qui s'éloigne du bobinoir et la spire de feuille intercalaire qui se trouve sur le bobinoir et que, la rotation du bobinoir se poursuivant,elle y est immobilisée, et immédiatement après, la feuille de pâte est enroulée, en même temps que la feuille intercalaire, la rotation du bobinoir se faisant dans le même sens que le mouvement de la bande transporteuse à la station de renvoi.

4. Procédé selon l'une des revendications 1 à 3, caractérisé par le fait que, pour former la feuille intercalaire on emploie un papier pourvu d'une moulure longitudinale.

5. Dispositif pour la réalisation du procédé selon l'une des revendications 1 à 4, caractérisé par le fait que le dispositif présente un bobinoir (3) muni d'une commande (52) commutable de façon intermittente et d'un dispositif de retenue pour les feuilles (2) à enrouler, bobinoir qui, vu axialement, est monté tournant à l'une de ses extrémités et est ouvert à l'autre extrémité et qui est disposé en-dessous d'une station de renvoi (21) fournissant la matière, d'une bande transporteuse (1) prévue pour l'alimentation en feuilles de pâte (2) et que le dispositif présente d'autre part une bande transporteuse (30, 31) pour les feuilles intercalaires (6), se dirigeant vers le bobinoir et muni d'une commande commutable de façon intermittente.

6. Dispositif selon la revendication 5, caractérisé par le fait que le bobinoir (3) est conformé en fourche, entre les dents (26, 27) de laquelle une feuille intercalaire (6) et une feuille de pâte (2) peuvent être introduites.

7. Dispositif selon la revendication 5 ou la revendication 6, caractérisé par le fait que le bobinoir (3) est conformé en fourche à deux dents, dont les dents (26, 27) ont une conformation plate sur leurs côtés (28) tournés en regard l'une de l'autre, et une conformation arrondie sur leurs côtés extérieurs (29).

8. Dispositif selon la revendication 5, caractérisé par le fait que le bobinoir (3) est pourvu d'un dispositif de retenue conformé en dispositif d'aspiration (23,24).

9. Dispositif selon l'une des revendications 5 à 8, caractérisé par le fait que le bobinoir (3) est monté à coulissement axial et qu'il est muni d'une commande de translation au moyen de laquelle il peut entrer et sortir de son logement de pivotement.

10. Dispositif selon l'une des revendications 5 à 9, caractérisé par le fait que la ligne transporteuse des feuilles intercalaires (6) est munie de bandes transporteuses perforées (30), qui sont équipées d'un entraînement et qui passent au-dessus d'une caisse aspirante (31), laquelle est munie, dans les zones placées en-dessous des bandes transporteuses, d'orifices d'aspiration (32) qui, dans la suite progressive le long des bandes transporteuses, sont alignées périodiquement avec les orifices de perforation (33) des bandes transporteuses (30).

11. Dispositif selon l'une des revendications 5 à 10, caractérisé par le fait que la ligne transporteuse des feuilles intercalaires (6) présente une base conformée en rail à gorge transversale ou en rouleau (35) qui est disposée transversalement au sens de la marche de la bande transporteuse en dépassant celle-ci, et des plioirs (36) ou des rouleaux de pliage concourant avec les rainures transversales (37) de cette base et y pénétrant, qui impriment des moulures longitudinales dans les feuilles intercalaires qui sont conduites entre la base et les plioirs ou rouleaux de pliage.

12. Dispositif selon la revendication 11, caractérisé par le fait que, sur la ligne transporteuse, à l'extrémité de celle-ci qui a le bobinoir, sont prévus, entre les bandes transporteuses (30) des rouleaux de pression (38) montés oscillants, qui pressent les feuilles intercalaires (6) contre les boîtes aspirantes (31) ou les bandes transporteuses (30).

13. Dispositif selon l'une des revendications 5 à 12, caractérisé par le fait, qu'il est disposé, sur la ligne transporteuse des feuilles intercalaires (6) un dispositif (40) de dépôt de colle pour apporter, par impulsions, de petites quantités de colle sur la zone de l'extrémité des feuilles intercalaires.

14. Dispositif selon l'une des revendications 5 à 13, caractérisé par le fait qu'une trappe à ressort (55) venant en appui sur la face extérieure du rouleau se trouvant sur le bobinoir (3) est prévue pour appui de l'extrémité de la feuille intercalaire (6) sur le rouleau.

15. Dispositif selon l'une des revendications 5 à 14, caractérisé par le fait que dans la zone de la station de renvoi (21) du côté du bobinoir de la bande transporteuse (1) prévue pour l'alimentation en feuilles de pâte (2), il est disposé un capteur (45) qui détecte la présence d'une feuille de pâte (2) sur la bande transporteuse (1) arrivant à la station de renvoi (21), lequel capteur est relié à la commande de l'entraînement du bobinoir (52) et dans le cas où une feuille de pâte est présente, déclenche l'entraînement du bobinoir (52) de préférence avec une temporisation.

16. Dispositif selon l'une des revendications 5 à 14, caractérisé par le fait que le dispositif présente un palier (43) pour un rouleau d'approvisionnement (44) sur lequel est enroulée une bande de papier dans le sens longitudinal, à partir de laquelle les feuilles intercalaires sont découpées, que, en regardant dans le sens de la marche de la ligne transporteuse des feuilles intercalaires (6), dans la zone du début de cette ligne transporteuse, il est disposé une cisaille à tronçonner(42) divisant la feuille de papier en tronçons, et dans la zone du bobinoir (3) il est disposé un capteur (45) détectant l'arrivée d'une feuille intercalaire (6) ou du bord antérieur de celle-ci, et que ce capteur (45) est relié à l'entraînement de la cisaille à tronçonner (42).

17. Dispositif selon la revendication 13, caractérisé par le fait que, dans la zone du début de la ligne transporteuse des feuilles intercalaires, en un emplacement situé avant le dispositif (40) de dépôt de colle et et après la cisaille à tronçonner (42), il est disposé un capteur (41) qui détecte le passage du bord postérieur d'une feuille intercalaire (6), et qui est relié au dispositif de déclenchement du dispositif de dépôt de colle (40).

FIG.1

FIG.2

FIG.3

FIG. 4 A   B   C   D

FIG. 7

FIG. 5

FIG. 6